# DEMANDE DE BREVET EUROPEEN

(11) **EP 1 130 425 A1**
(43) Date de publication de la demande: **05.09.2001**
(21) Numéro de dépôt: 01400487.3
(22) Date de dépôt: 23.02.2001
(51) Int. Cl.: G02B 6/136

(54) **Composant optique comportant un guide à structure "ridge" gravé chimiquement et son procédé de fabrication**

(30) Priorité: 24.02.2000 FR 0002349
(71) Demandeur: ALCATEL, 75008 Paris (FR)
(72) Inventeur: Bouche, Nicolas, 94230 Cachan (FR); Lovisa, Stéphane, 94230 Cachan (FR)
(74) Mandataire: Ballot, Paul

(57) **Abrégé**

La présente invention concerne un composant optique comportant au moins un guide à structure "ridge" obtenu par gravure chimique sur un substrat en matériau semiconducteur, le "ridge" présentant une base et une face supérieure, le guide présentant un tracé comportant au moins une section courbe, la tangente en tout point du tracé définissant l'orientation locale (β) du guide. Selon l'invention, la largeur de la base (weff) du "ridge" est sensiblement constante tout au long du guide et la largeur de la face supérieure (w) du "ridge" varie en fonction de l'orientation locale (β) du guide par rapport à la direction cristallographique de référence (R) du substrat.

## Description

L'invention concerne un composant optique comportant un guide à structure "ridge" de l'anglais "ridge waveguide" que l'on pourrait traduire en français par guide en forme de crête. L'invention s'applique à un tel guide présentant une section courbe.

L'invention concerne également un procédé de fabrication d'un tel guide.

Le domaine de l'invention est celui des guides à structure "ridge" gravés chimiquement sur un substrat en matériau semi-conducteur et présentant des sections courbes; c'est à dire dont l'orientation n'est pas parallèle à la direction cristallographique de référence du substrat.

Lors de la gravure chimique d'un guide à structure "ridge", la largeur de la base du "ridge" est plus petite que la largeur de sa face supérieure. Dans le cas d'un guide avec des sections courbes, cette différence est variable le long du guide et peut être accentuée en certains points du guide. Or la variation de la largeur de la base du "ridge" induit des pertes de propagation du mode guidé et un changement de l'indice effectif du mode optique du guide.

Une solution consiste par conséquent à chercher à maintenir constante la largeur du "ridge", même dans une courbe. Pour cela, on peut par exemple réaliser le guide par gravure sèche. Un tel procédé de gravure sèche permet de réaliser des guides à structure "ridge" de section rectangulaire en tout point du guide quelque soit l'orientation locale du guide. Cependant une telle gravure sèche ne permet pas d'obtenir une structure "ridge" de même qualité que celle obtenue par une gravure chimique.

En particulier, les côtés du "ridge" sont plus rugueux, l'irrégularité pouvant atteindre quelques dizaines de nanomètres de profondeur.

D'autre part, la gravure est plus longue, quelques heures comparées à quelques minutes pour la gravure chimique.

En outre, l'arrêt de la gravure n'est pas précisément contrôlé comme dans le cas de la gravure chimique.

Le but de l'invention est de proposer un guide à structure "ridge" gravé chimiquement et présentant un indice modal contrôlé en tout point du guide, même dans des sections courbes.

L'invention est basée sur une observation physique surprenante selon laquelle, dans le cas d'un guide à structure "ridge", l'indice modal est déterminé par la largeur de la base du "ridge".

L'invention a plus particulièrement pour objet un composant optique comportant au moins un guide à structure "ridge" obtenu par gravure chimique sur un substrat en matériau semi-conducteur, le "ridge" présentant une base et une face supérieure, le guide présentant un tracé comportant au moins une section courbe, la tangente en tout point de tracé définissant une orientation locale du guide, caractérisé en ce que la largeur de la base du "ridge" est sensiblement contrôlée tout au long du guide et la largeur de la face supérieure du "ridge" varie en fonction de l'orientation du guide par rapport à la direction cristallographique de référence du substrat.

Selon une application, pour laquelle on souhaite obtenir un indice modal constant en tout point du guide, la largeur de la base du ridge est sensiblement constante le long de la section courbe du tracé du guide.

Selon une caractéristique, le guide est réalisé sur un substrat en matériau semi-conducteur III-V et comporte une couche inférieure d'arrêt de la gravure en matériau semi-conducteur quaternaire.

Selon une particularité, le matériau quaternaire est composé d'Arséniure de Phosphure de Gallium Indium (InGaAsP).

La présente invention concerne également un procédé de fabrication d'un composant optique réalisé sur un substrat en matériau semi-conducteur et comportant un guide à structure "ridge", le guide présentant un tracé comportant au moins une section courbe, la tangente en tout point du tracé définissant une orientation locale du guide, ladite structure étant obtenue par au moins une étape de gravure chimique à travers un masque définissant en particulier la largeur de la face supérieure du "ridge", caractérisé en ce que ladite largeur de la face supérieure varie en fonction de l'orientation locale du guide par rapport à la direction cristallographique de référence du substrat et en fonction de la largeur désirée de la base du "ridge".

Selon une caractéristique, la gravure chimique est réalisée à partir d'une solution chimique sélective selon la composition chimique et l'orientation cristallographique des matériaux semi-conducteurs constituant le guide à structure "ridge". Par exemple, une solution d'acide chlorhydrique et d'acide orthophosphorique (HCl/H₃PO₄).

Les particularités et avantages de l'invention apparaîtront clairement à la lecture de la description faite à titre d'exemple non limitatif et en regard des dessins annexés sur lesquels :
- la figure 1 représente les directions d'une plaquette de substrat utilisée pour la fabrication de composant optique,
- la figure 2a représente une vue de dessus de plusieurs guides à structure "ridge" gravés chimiquement et présentant des rayons de courbure différents,
- la figure 2b est une vue en perspective de deux guides à structure "ridge",
- la figure 2c représentant une vue en coupe de deux guides à structure "ridge",
- les figures 3a à 3c représentent des vues schématiques en coupe respectivement d'un guide droit, d'un guide courbe non corrigé et d'un guide courbe corrigé,
- la figure 4 est une courbe représentant l'inclinaison θ des bords du "ridge" en fonction de l'orientation β du guide.

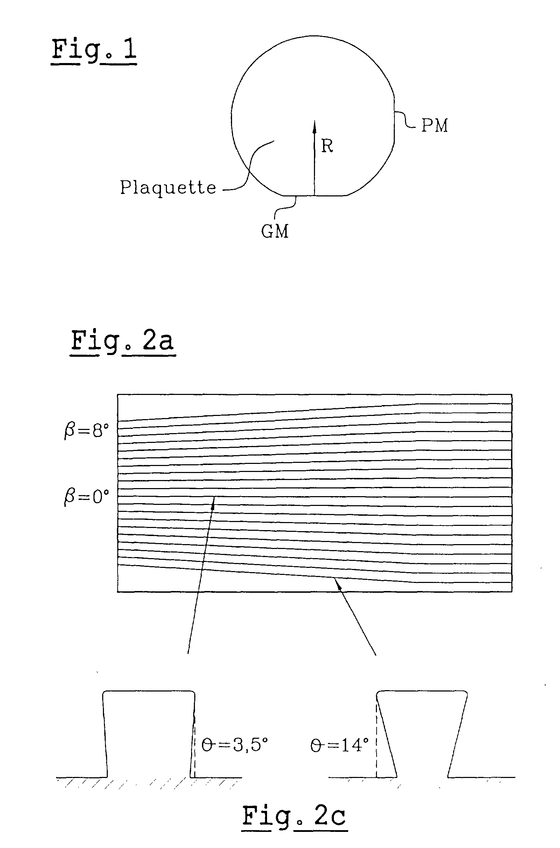

La figure 1 illustre une plaquette de substrat utilisée pour la fabrication de composants optiques et en particulier des guides à structure "ridge" selon l'invention.

Par la suite, on appellera simplement ridge un guide à structure "ridge".

Une telle plaquette est composée d'un matériau cristallin constitué d'un composé semi-conducteur III-V tel que du Phosphure d'Indium (InP) par exemple. Afin de repérer les directions cristallographiques de la plaquette, cette dernière présente généralement un grand méplat GM et un petit méplat PM. On choisit comme direction de référence R la direction perpendiculaire au grand méplat dans le plan de la plaquette, cette direction correspondant généralement à une direction du cristal.

Les figures 2a à 2c illustrent le phénomène induit par la courbure des guides à structure "ridge". Plusieurs guides ont été gravés sur la plaquette avec différentes directions d'orientation.

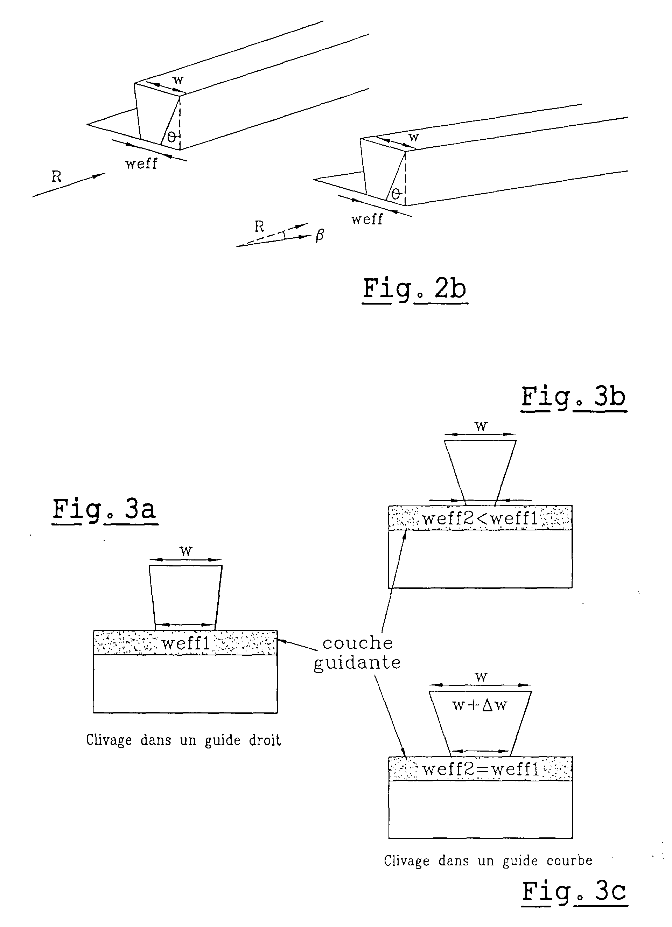

L'orientation des guides est définie par la direction de la tangente à la courbure en un point donné du tracé du guide. Les directions d'orientation sont donc variables par rapport à la direction cristallographique de référence R de la plaquette. Les figures 2b et 2c illustrent les effets de la courbure des guides sur la forme des ridges.

Les ridges représentés vus de dessus sur la figure 2a présentent une direction d'orientation qui forme un angle β par rapport à la direction de référence R. Cet angle β sera appelé dans la suite l'orientation locale du ridge car il dépend d'un point donné du guide.

Le ridge central est tel que β = 0°. Les autres ridges sont disposés symétriquement de part et d'autre du ridge central pour faire apparaître plus aisément la courbure, mais une telle disposition n'est pas forcément systématique. Pour le ridge le plus excentré, l'orientation β est d'environ 8°.

La figure 2b représente une vue en perspective de deux ridges. On désigne par θ l'angle d'inclinaison que fait le bord du ridge avec la verticale, par w la largeur de la face supérieure du ridge et par weff la largeur de la base du ridge.

La vue en coupe représentée sur la figure 2c fait apparaître des angles θ et des largeurs de base weff différentes pour des points de deux ridges d'orientation locale différente. Dans le cas d'un ridge orienté selon la direction de référence R, tel que β = 0°, l'angle θ mesuré est d'environ 3,5° et la largeur de la base weff est quasiment identique à la largeur de la face supérieure w. Par contre, dans le cas d'un ridge dont la direction d'orientation est inclinée par rapport à la direction de référence R, tel que β = 8°, l'inclinaison du bord θ atteint 14° et la largeur de la base weff est nettement plus petite que celle de la face supérieure w.

Les figures 3a à 3c illustrent plus spécifiquement les particularités des guides à structure "ridge" présentant un tracé comportant des sections courbes et présentent en détail la solution apportée par l'invention pour contrôler la largueur de la base weff du ridge en vue d'empêcher sa diminution dans les sections courbes.

La figure 3a est vue en une coupe d'une portion droite d'un guide. On obtient alors une largeur de la base weffl et une largeur de la face supérieure w.

La figure 3b est une vue en coupe d'une portion courbe d'un guide non corrigé. On constate que la largeur de la base weff2 en ce point du guide est plus petite que celle weffl d'un point situé sur une portion droite du guide, et cela pour une même largeur de la face supérieure w.

La figure 3c est une vue en coupe d'une portion courbe d'un guide corrigé selon l'invention. On constate alors que la largeur de la base weff2 en ce point du guide est égale à celle weffl d'un point situé sur une portion droite du guide, et cela malgré la courbure locale du guide. Pour cela, il a été nécessaire d'augmenter la largeur de la face supérieure w de Δw.

L'invention propose de faire varier la largeur de la face supérieure w du ridge en fonction de son orientation β au moyen d'un masque adapté.

La hauteur du ridge est constante sur l'ensemble du guide. La largeur de la base du ridge weff dépend donc directement de l'inclinaison des bords θ et de la largeur de la face supérieure w. Ainsi, plus l'inclinaison θ est importante, plus la largeur de la base weff est réduite pour une même largueur de la face supérieure w.

Pour maintenir la largeur de la base weff constante, il faut alors augmenter la largeur de la face supérieure w pour compenser l'inclinaison des bords θ.

Or, il a été établi que l'inclinaison θ dépend elle-même de l'orientation locale β. On peut par conséquent établir une relation entre la l'orientation locale β, la largeur de la base weff et la largeur de la face supérieure w. Ainsi à partir d'une orientation β imposée au guide, on peut contrôler la largeur de la base weff en faisant varier la largeur de la face supérieure w.

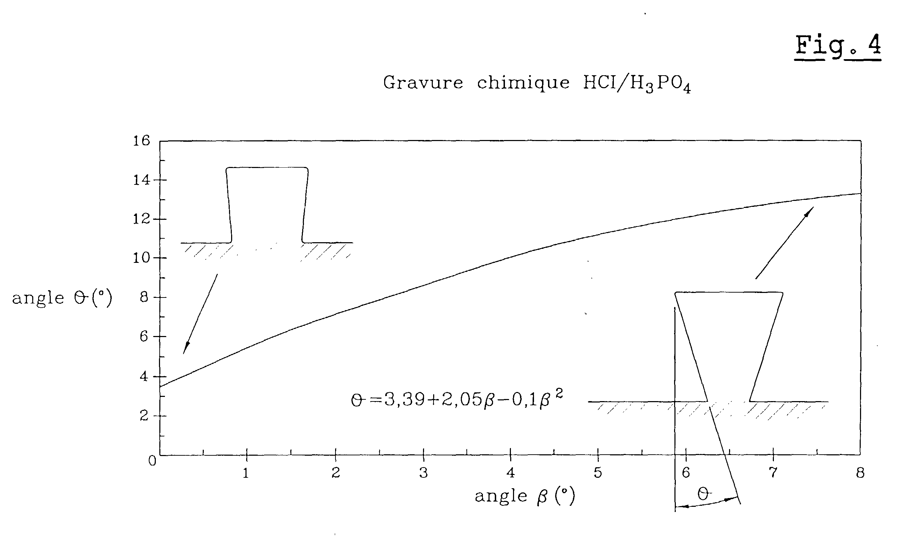

Sur la figure 4 sont reportées les mesures de l'inclinaison des bords d'un ridge θ en fonction de son orientation locale β par rapport à la direction de référence R.

Ces mesures ont été établies pour des ridges gravés chimiquement au moyen d'une solution chimique sélective. Une telle solution agit de manière sélective sur les matériaux semi-conducteur en fonction de leur composition chimique et de leur orientation cristallographique. Cela signifie que seuls certains matériaux seront attaqués par la solution.

Les mesures reportées sur cette figure 4 ont été obtenues en appliquant une solution constituée d'un mélange d'acide chlorhydrique et d'acide orthophosphorique (HCl/H₃PO₄). Dans l'exemple considéré, le guide est constitué d'une superposition de couches composées successivement d'InP (Phosphure d'Indium), d'InGaAsP (Arséniure de Phosphure de Gallium Indium), d'InP et d'InGaAsP. Dans ces conditions, une bonne approximation de la portion de courbe donnant l'angle θ en fonction de l'angle β est de la forme :
θ = 3,39 + 2, 05 β - 0,1 β² , les angles β et θ étant exprimés en degrés.

Avec une autre solution de gravure chimique, on obtiendrait d'autres, coefficients, voire une autre fonction reliant θ à β.

On a pu établir une relation entre l'orientation β du guide et les largeurs de la base weff et de la face supérieure w du ridge, ainsi qu'une relation entre les angles β et θ. Afin de pouvoir contrôler la largeur de la base weff du ridge et éviter ainsi les pertes de propagation trop importantes, en particulier dans les sections courbes du guide, on fait varier la largeur de la face supérieure w du ridge.

Pour permettre la variation de la largeur de la face supérieure w du ridge, on peut concevoir un masque de fabrication d'un guide présentant un tracé courbe dont la largeur est variable. La programmation d'un tel masque sera plus complexe du fait de cette largeur variable, mais cet inconvénient n'intervient cependant qu'une fois, lors de la programmation. Le procédé de fabrication d'un guide à structure "ridge" selon l'invention reste donc avantageux.

Dans un exemple de réalisation, le guide peut être constitué d'un substrat en matériau semi-conducteur III-V tel que de l'InP, recouvert d'une première couche d'un matériau ternaire ou quaternaire semi-conducteur III-V qui arrête la gravure tel que de l'InGaAsP, sur laquelle on superpose une couche d'un composé III-V tel que de l'InP puis une autre couche d'un matériau ternaire ou quaternaire éventuellement de même composition sinon de même proportion que la première couche de matériau ternaire ou quaternaire.

L'invention ne s'applique pas uniquement aux composants optiques réalisés sur des substrats en matériaux III-V cités précédemment, mais également à toute réalisation sur des matériaux à structure cristalline utilisés habituellement pour la fabrication de composants optiques, c'est à dire des matériaux II-VI et IV-IV.

Selon un procédé de fabrication classique, le masque permettra de déposer conformément à la configuration désirée une couche de résine d'une largeur w résistant à la gravure chimique à laquelle sera soumis le guide pour la gravure de la structure "ridge".

## Revendications

1. Composant optique comportant au moins un guide à structure "ridge" obtenu par gravure chimique sur un substrat en matériau semi-conducteur, le "ridge" présentant une base et une face supérieure, le guide présentant un tracé comportant au moins une section courbe, la tangente en tout point du tracé définissant une orientation locale (β) du guide, **caractérisé en ce que** la largeur de la base (weff) du "ridge" est sensiblement contrôlée tout au long du guide et la largeur de la face supérieure (w) du "ridge" varie en fonction de l'orientation locale (β) du guide par rapport à la direction cristallographique de référence (R) du substrat.

2. Composant selon la revendication 1, **caractérisé en ce que** la largeur de la base (weff) du ridge est sensiblement constante le long de la section courbe du tracé du guide.

3. Composant selon l'une des revendications précédentes, **caractérisé en ce que** le guide est réalisé sur un substrat en matériau semi-conducteur III-V et comporte une couche inférieure d'arrêt en matériau semi-conducteur quaternaire.

4. Composant selon la revendication 3, **caractérisé en ce que** le matériau quaternaire est composé d'Arséniure de Phosphure de Gallium Indium (InGaAsP).

5. Procédé de fabrication d'un composant optique réalisé sur un substrat en matériau semi-conducteur et comportant un guide à structure "ridge", le guide présentant un tracé comportant au moins une section courbe, la tangente en tout point du tracé définissant l'orientation locale (β) du guide, ladite structure étant obtenue par au moins une étape de gravure chimique à travers un masque définissant en particulier la largeur de la face supérieure (w) du "ridge", **caractérisé en ce que** ladite largeur de la face supérieure (w) varie en fonction de l'orientation locale β du guide par rapport à la direction cristallographique de référence (R) du substrat et en fonction de la largeur désirée de la base (weff) du "ridge".

6. Procédé selon la revendication 5, **caractérisé en ce que** la largeur (w) de la face supérieure du "ridge" le long de la section courbe du tracé varie de manière à ce que la largeur (weff) de la base du "ridge" soit constante.

7. Procédé selon l'une des revendications 5 à 6, **caractérisé en ce que** la gravure chimique est réalisée à partir d'une solution chimique sélective selon la composition chimique et l'orientation cristallographique des matériaux semi-conducteurs constituant le guide à structure "ridge".

8. Procédé selon la revendication 7, caractérisé en ce la solution chimique est une solution d'acide chlorhydrique et d'acide orthophosphorique (HCl/H₃PO₄).
